# EUROPÄISCHE PATENTSCHRIFT

(11) **EP 3 047 986 B1**
(45) Veröffentlichungstag und Bekanntmachung des Hinweises auf die Patenterteilung: **11.11.2020**
(21) Anmeldenummer: 16152398.0
(22) Anmeldetag: 22.01.2016
(51) Int. Cl.: B60D 1/02, B60D 1/36, B60D 1/62

(54) **KUPPLUNGSSENSOR**
COUPLING SENSOR
CAPTEUR D'EMBRAYAGE

(30) Priorität: 23.01.2015 DE 102015201184
(43) Veröffentlichungstag der Anmeldung: 27.07.2016
(73) Patentinhaber: JOST-Werke Deutschland GmbH, 63263 Neu-Isenburg (DE)
(72) Erfinder: Szczepanek, Udo, 82223 Eichenau (DE)
(74) Vertreter: Ruttensperger Lachnit Trossin Gomoll

(56) Entgegenhaltungen:
- WO-A1-2005/028220
- DE-A1-102005 028 026
- DE-U1- 9 401 718

## Beschreibung

Die vorliegende Erfindung betrifft eine Kupplungsanordnung zum lösbaren Kuppeln eines Zugfahrzeugs mit einem Nachlauffahrzeug gemäß dem Oberbegriff des Anspruchs 1.

Eine Kupplungsanordnung mit einer Zugöse als das Kupplungsmittel und einem Kupplungsbolzen als das Gegenkupplungsmittel ist aus der DE 10 2006 011 676 A1 bekannt. Zur Herstellung einer lösbaren Verbindung zwischen Zugfahrzeug und Nachlauffahrzeug kann der zwischen einer Öffnungsstellung und einer Kupplungsstellung verstellbare Kupplungsbolzen eine zentrale Öffnung der Zugöse durchsetzen. Das Dokument DE 10 2005028026 A1 offenbart eine Kupplungsanordnung gemäß dem Oberbegriff des Anspruchs 1.

Zur Herstellung einer Kupplungsverbindung zwischen Kupplungseinrichtungen beliebiger Kupplungsanordnungen werden das Zugfahrzeug und das Nachlauffahrzeug einander angenähert, bis sich das Kupplungsmittel relativ zu dem das Gegenkupplungsmittel tragenden Fahrzeug in einer Kupplungsbereitschaftsstellung befindet, in welcher durch Relativbewegung zwischen Kupplungsmittel und Gegenkupplungsmittel ohne damit verbundene Relativbewegung von Zugfahrzeug und Nachlauffahrzeug die Kupplungsverbindung unmittelbar herstellbar ist.

Im Falle der aus der oben genannten Druckschrift bekannten Anhängerkupplung befindet sich die Zugöse beispielsweise dann in einer Kupplungsbereitschaftsstellung, wenn ohne weitere Relativbewegung von Zugfahrzeug und Nachlauffahrzeug lediglich durch Verstellung des Kupplungsbolzens dieser durch die Zugöse hindurch verstellt werden kann, was unmittelbar zu einer formschlüssigen Kupplungsverbindung führt. Bei Kupplungen dieser Bauart ist die Kupplungsbereitschaftsstellung mit der Kupplungsstellung nach Herstellung der Kupplungsverbindung im Wesentlichen identisch. Das gleiche gilt für den Kupplungsbereitschaftsstellungsbereich und den Kupplungsstellungsbereich an einer Bolzenkupplung. Auch diese Bereiche sind im Wesentlichen identisch. Gegebenenfalls kann der Kupplungsbereitschaftsstellungsbereich geringfügig größer sein als der Kupplungsstellungsbereich, wenn Zugöse und Kupplungsbolzen vor dem Verstellen des Kupplungsbolzens zur Durchsetzung der Zugöse aufgrund eines Versatzes zueinander eine Relativstellung einnehmen, die bei hergestellter Kupplungsverbindung nicht bestehen kann. Die Kupplungsstellung kann aber von dem Kupplungsbolzen während seiner Verstellbewegung zur Durchsetzung der Zugöse herbeigeführt werden, etwa indem der Kupplungsbolzen während seiner Verstellbewegung durch Anlageeingriff die Zugöse ausgehend von der urprünglichen Versatzstellung geringfügig so zu einer stärkeren Konzentrizität hin verlagert, dass er nach Abschluss seiner Verstellbewegung die Zugöse vollständig durchsetzt und somit mit der Zugöse eine korrekte formschlüssige Kupplungsverbindung bildet. In diesem Fall ist der Kupplungsstellungsbereich, also der Bereich aller möglichen Relativstellungen zwischen Zugöse und Kupplungsbolzen im Zustand einer korrekt hergestellten formschlüssigen Kupplungsverbindung, vollständig in dem geringfügig größeren Kupplungsbereitschaftsstellungsbereich, also dem Bereich aller möglichen Relativstellungen zwischen Zugöse und Kupplungsbolzen, in denen eine korrekte formschlüssige Kupplungsverbindung herstellbar ist, enthalten.

Um das Herstellen einer Kupplungsverbindung zwischen den mit häufig nur schwer zu manövrierenden Fahrzeugen verbundenen Kupplungseinrichtungen zu erleichtern, besteht üblicherweise ein Bereich von unterschiedlichen Kupplungsbereitschaftsstellungen, von welchen jede die Herstellung einer Kupplungsverbindung ohne weitere Relativbewegung von Zugfahrzeug und Nachlauffahrzeug gestattet. Die Gesamtheit aller möglichen Kupplungsbereitschaftsstellungen von Kupplungseinrichtungen einer Kupplungsanordnung ist in der vorliegenden Anmeldung als "Kupplungsbereitschaftsstellungsbereich" bezeichnet. Ebenso ist die Gesamtheit aller möglichen Kupplungsstellungen in der vorliegenden Anmeldung als "Kupplungsstellungsbereich" bezeichnet.

Bei der aus der oben genannten Druckschrift bekannten Kupplungsanordnung ragt dann, wenn sich der Kupplungsbolzen in seiner Öffnungsstellung befindet, ein Lösehebel in einen Zugösenaufnahmeraum eines den Kupplungsbolzen aufnehmenden Kupplungskörpers. Der Lösehebel blockiert in dieser Stellung eine Verstellung des Kupplungsbolzens von seiner Öffnungsstellung in seine Kupplungsstellung. Wird nun eine Zugöse in den Zugösenaufnahmeraum der bekannten Kupplungsanordnung eingeführt, verdrängt diese den Lösehebel, wodurch die Verstellung des Kupplungsbolzens von seiner Öffnungsstellung in seine die Zugöse durchsetzende Kupplungsstellung grundsätzlich gestattet wird.

Unter Umständen kann es jedoch vorkommen, dass das Nachlauf- und das Zugfahrzeug einander nur ungenau und mit zu hoher Geschwindigkeit angenähert werden, so dass es zu einer Kollision mit anschließendem unkontrolliertem Zurückprellen von Nachlauf- und Zugfahrzeug kommt. In diesem Fall kann es trotz ordnungsgemäßer Verdrängung des Lösehebels sein, dass sich die Kupplungseinrichtungen, von außen nicht oder nur schwer erkennbar, gerade nicht mehr in einer Kupplungsstellung oder einer Kupplungsbereitschaftsstellung befinden und somit eine Kupplungsverbindung zwischen den Kupplungseinrichtungen, für einen unter Zeitdruck stehenden Fahrzeugführer, unbemerkt nicht herstellbar ist. Betätigt der Fahrzeugführer in einer dieser Situationen die Kupplungsanordnung zur Herstellung einer Kupplungsverbindung, wird er in der Regel davon ausgehen, dass eine Zugkraft übertragende Kupplungsverbindung hergestellt wurde, obwohl dies tatsächlich nicht so ist. Der Fahrzeugführer begibt sich darauf in den Führerstand des Zugfahrzeugs und setzt den vermeintlich gebildeten Zug in Bewegung, was dazu führt, dass weitere im Zuge des Ankupplungsvorgangs hergestellte Verbindungen zwischen Zugfahrzeug und Nachlauffahrzeug, wie beispielsweise eine elektrische Verbindungsleitung, Druckluftschläuche oder eine hydraulische Verbindung, abgerissen werden.

Ähnliche Nachteile ergeben sich für alle Arten von gattungsgemäßen Kupplungsanordnungen, bei welchen der Fahrzeugführer nicht in der Lage ist, eindeutig zu erkennen, ob die Zugkraft übertragende Kupplungsverbindung hergestellt ist oder nicht.

Eine gattungsgemäße Kupplungsanordnung ist aus der DE 697 05 591 T2 bekannt. Diese offenbart eine landwirtschaftliche Bolzenkupplung mit einem starren Kupplungskörper, in welchen eine Zugöse einfahrbar ist. Am Kupplungskörper sind sowohl Sensoren zur Erfassung der Zugöse als auch zur Erfassung des Kupplungsbolzens in seiner die Zugöse durchsetzenden Stellung vorgesehen.

Aus der DE 10 2005 028 026 A1 ist eine Bolzenkupplung mit schwenkbarem Fangmaul bekannt, welcher eine Sensorik aufweist, die zur Erfassung von Verbindungselementen ausgebildet ist, welche zur Herstellung einer energieübertragenden Verbindung zwischen Zug- und Nachlauffahrzeug dienen.

Es ist daher Aufgabe der vorliegenden Erfindung, eine gattungsgemäße Kupplungsanordnung weiterzubilden.

Diese Aufgabe wird erfindungsgemäß gelöst durch eine Kupplungsanordnung mit allen Merkmalen des Anspruchs 1.

Eine erfindungsgemäße Kupplungsanordnung besitzt den Vorteil, dass eine Bedienperson einen Erfolg eines Ankupplungsvorgangs anhand eines von dem Sensor ausgegebenen Erfassungssignals unmittelbar überprüfen kann, da die Kupplungsverbindung dann sicher nicht korrekt hergestellt ist, wenn sich das Kupplungsmittel relativ zu dem das Gegenkupplungsmittel tragenden Fahrzeug nicht in einer Kupplungsstellung befindet.

Gemäß einer vorteilhaften Weiterbildung der vorliegenden Erfindung ist der Sensor dazu ausgebildet, unabhängig von Betriebszuständen der Kupplungsanordnung zu erfassen, ob sich das Kupplungsmittel relativ zu dem das Gegenkupplungsmittel tragenden Fahrzeug in dem Kupplungsstellungsbereich befindet oder nicht.

Dabei sind mit Betriebszuständen der Kupplungsanordnung insbesondere betriebsbedingte Zustände des Kupplungsmittels oder/und des Gegenkupplungsmittels gemeint, wie beispielsweise bei der oben genannten bekannten Kupplungsanordnung die Stellung des Kupplungsbolzens, etwa ob sich der Kupplungsbolzen in seiner Öffnungsstellung oder in seiner Kupplungsstellung befindet, oder die Stellung des Lösehebels, etwa ob der Lösehebel verdrängt wurde oder nicht. Solche Betriebszustände umfassen insbesondere auch Zustände, bei denen eine Zugkraft übertragende Kupplungsverbindung hergestellt ist.

Während bei der oben genannten bekannten Kupplungsanordnung bereits der Lösehebel zumindest während eines sehr kurzen Zeitabschnitts einer Einführbewegung der Zugöse in den Kupplungskörper zuverlässige Informationen über das grundsätzliche Vorhandensein der Zugöse im Zugösenaufnahmeraum zu liefern vermag, ist es gemäß der obigen Weiterbildung möglich, die zur erfolgreichen Herstellung einer Kupplungsverbindung führende Relativstellung von Kupplungsmittel und dem das Gegenkupplungsmittel tragenden Fahrzeug - und damit mittelbar eine Relativstellung von Kupplungsmittel und Gegenkupplungsmittel - zu beliebigen Zeitpunkten nach einer erfolgten Annäherung von Zug- und Nachlauffahrzeug zu überprüfen.

Damit erfolgt die Erfassung des Sensors vorzugsweise während oder nach einem Ankupplungsvorgang, da innerhalb dieses Zeitraums die Kupplungsverbindung hergestellt werden soll und hier die meisten Bedienfehler oder Funktionsstörungen der Kupplungsanordnung auftreten können. Deswegen wird vorgeschlagen, dass der Sensor dazu ausgebildet ist, nach Beginn eines Ankupplungsvorgangs zu erfassen, ob sich das Kupplungsmittel relativ zu dem das Gegenkupplungsmittel tragenden Fahrzeug in dem Kupplungsstellungsbereich befindet oder nicht.

Mit Beginn eines Ankupplungsvorgangs ist dabei der Zeitpunkt gemeint, bei dem das Kupplungsmittel in eine Kupplungsbereitschaftsstellung gebracht wurde, aber noch keine weiteren Maßnahmen unternommen werden, wie beispielsweise bei der oben genannten Kupplung das Verstellen eines Lösehebels, um die Kupplungsverbindung herzustellen.

Der Ankupplungsvorgang ist dann abgeschlossen, wenn alle notwendigen Maßnahmen zum Herstellen der Zugkraft übertragenden Kupplungsverbindung aus der Sicht des Fahrzeugführers durchgeführt wurden und bevor durch Bewegen des Zuges eine Zugkraft auf die Kupplungsverbindung ausgeübt wurde.

Da es nach Abschluss des Ankupplungsvorgangs wichtig ist, zu erkennen, ob die Kupplungsanordnung in der Lage ist, Zugkraft in gewünschter Weise zu übertragen, kann vorgesehen sein, dass der Sensor dazu ausgebildet ist, nach Abschluss eines Ankupplungsvorgangs zur Herstellung der Kupplungsverbindung zu erfassen, ob sich das Kupplungsmittel relativ zu dem das Gegenkupplungsmittel tragenden Fahrzeug in dem Kupplungsstellungsbereich befindet oder nicht.

Der Sensor ist entweder an dem das Kupplungsmittel oder an dem das Gegenkupplungsmittel tragenden Fahrzeug vorgesehen. Besonders effizient ist es, den Sensor in der Nähe des zu überwachenden Raumbereichs, d.h. dem Kupplungsstellungsbereich, anzubringen, und zwar so, dass möglichst wenig zusätzliche Bauteile für die Befestigung des Sensors an der Kupplungsanordnung benötigt werden.

Bekannte Anhängerkupplungen weisen ein Fangmaul auf, das zum Führen des Kupplungsmittels in den Kupplungsstellungsbereich dient. Das Fangmaul ist bei Gegenkupplungsmitteln mit Kupplungsbolzen erfindungsgemäß um eine Kupplungsbolzenlängsachse schwenkbar. Erfindungsgemäß ist der Sensor am Fangmaul angebracht und vorzugsweise ist der Sensor auf Höhe der vertikalen Mitte des Fangmauls angebracht. Diese Anordnungsorte stellen sicher, dass der Sensor nicht andere Komponenten der Kupplungsanordnung in ihrer Funktion behindert, das heißt, dass er beispielsweise das Verstellen eines eventuell vorhandenen Lösehebels nicht beeinträchtigt. Zusätzlich wird der Sensor an diesen Positionen vor mechanischen Einwirkungen, die beispielsweise bei der eingangs genannten bekannten Kupplungsanordnung durch nicht genau zentriertes Einführen der Zugöse auftreten, geschützt. Wird der Sensor auf Höhe der vertikalen Mitte des Fangmauls angebracht, so ist er weiter auch vor mechanischen Einwirkungen von oben und unten in Bezug auf das Zugfahrzeug geschützt.

Mechanische Sensoren treten notwendigerweise mit dem zu überwachenden Bauteil in Berührkontakt. Mechanische Sensoren sind besonders sicher und liefern ein zuverlässiges Erfassungsergebnis. Beispielsweise kann gemäß einer Ausführungsform der vorliegenden Erfindung der wenigstens eine Sensor als mechanischer Sensor in Form eines Verlagerungselements ausgestaltet sein, welches an dem Fangmaul, relativ zu diesem verlagerbar angeordnet ist.

Beispielsweise kann das Verlagerungselement an dem Fangmaul ein relativ zu diesem lenkbar angeordneter Schwenkhebel sein, dessen Relativschwenkstellung relativ zu dem ihn tragenden Bauteil ermittelt wird. Befindet sich das Kupplungsmittel relativ zum Gegenkupplungsmittel in einer Kupplungsstellung, dann weist der Schwenkhebel einen Relativschwenkwinkel in einem vorbestimmten Kupplungsschwenkwinkelbereich auf. Befindet sich das Kupplungsmittel dagegen relativ zum Gegenkupplungsmittel nicht in einer Kupplungsstellung, dann liegt der Schwenkwinkel des Schwenkhebels außerhalb des vorbestimmten Kupplungsschwenkwinkelbereichs.

So kann beispielsweise ein von der Schwenklagerung des Schwenkhebels am Fangmaul fernliegender Kontaktbereich des Schwenkhebels in einen Bereich einragen, in welchem der Schwenkhebel mit seinem Kontaktbereich beim Annähern des Kupplungsmittels an das Gegenkupplungsmittel unvermeidlich vom Kupplungsmittel kontaktiert wird. Durch den hergestellten Kontakt- beziehungsweise Anlageeingriff zwischen Kupplungsmittel und Schwenkhebel kann der Schwenkhebel bei fortgesetzter Annäherung von Kupplungsmittel und Gegenkupplungsmittel durch das Gegenkupplungsmittel verdrängt werden, wodurch sich die Relativschwenkstellung des Schwenkhebels relativ zum Gegenkupplungsmittel ändert. Wenn sich das Kupplungsmittel in einer Kupplungsstellung befindet, weist der Schwenkwinkel somit einen Relativschwenkwinkel innerhalb des vorbestimmten Kupplungsschwenkmittelbereichs auf.

Dabei reicht es aus, wenn der Schwenkwinkel relativ zum Gegenkupplungsmittel um lediglich eine einzige Schwenkachse schwenkbar ist. Diese Schwenkachse kann parallel zur Gierachse oder parallel zur Nickachse des Fahrzeugs oder eine Linearkombination aus den genannten Parallelen sein. Vorzugsweise ist die Schwenkachse parallel zur Gierachse des Fahrzeugs, sodass der Schwenkhebel in Fahrzeugquerrichtung seitlich von einem Raumbereich angeordnet werden kann, welcher bei hergestellter Kupplungsverbindung vom Kupplungsmittel eingenommen wird. Gerade im erfindungsgemäßen Falle von Bolzenkupplungen ist der Bereich unmittelbar über und unter dem bei hergestellter Kupplungsverbindung vom Kupplungsmittel eingenommenen Raum bereits von der Mechanik des Kupplungsbolzens oder/und von einem Kupplungsbolzenwiderlager belegt, sodass hier nur bedingt Bauraum zur Aufnahme eines mechanischen Sensors mit Schwenkhebel zur Verfügung steht. Anstelle eines Schwenkhebels kann ein mechanischer Sensor auch einen translatorisch verlagerbaren Taster aufweisen, welcher vom Kupplungsmittel bei Annäherung an das Gegenkupplungsmittel translatorisch verdrängt wird. In diesem Falle kann ein translatorischer Relativverschiebeweg einen Verschiebewert aufweisen, welcher dann in einem vorbestimmten Kupplungsverschiebewertbereich liegt, wenn sich das Kupplungsmittel relativ zum Gegenkupplungsmittel in einer Kupplungsstellung befindet. Ist letzteres nicht der Fall, liegt der Verschiebewert des translatorisch verschiebbaren Tasters außerhalb des vorbestimmten Kupplungsverschiebewertebereichs.

Im Gegensatz hierzu können berührungslose Sensoren weit vom zu überwachenden Raumbereich entfernt angeordnet sein, wobei bei diesen Sensoren das Erfassungsvermögen und die Erfassungseffizienz mit räumlicher Nähe zum zu überwachenden Raumbereich steigt. Berührungslose Sensoren weisen weiterhin gegenüber mechanischen Sensoren den Vorteil auf, verschleißärmer zu sein, da sie in der Regel keine mechanischen Komponenten benötigen und nicht in Berührkontakt mit dem zu erfassenden Gegenstand treten müssen. Eine Weiterbildung der Erfindung ist deswegen, dass der Sensor ein berührungsloser Sensor ist.

Der Sensor der erfindungsgemäßen Kupplungsanordnung ist ein induktiver oder/und kapazitiver Sensor. Bei einem von der vorliegenden Erfindung nicht umfassten optischen Sensor wäre beispielsweise eine Lichtschranke vorstellbar, die von dem Kupplungsmittel unterbrochen wird, wenn es sich in dem Kupplungsstellungsbereich befindet. Da viele Kupplungsanordnungen oder zumindest das Kupplungsmittel bzw. das Gegenkupplungsmittel aus Metall bestehen, können Eigenschaften dieser Materialart damit vorteilhaft ausgenutzt werden, wobei die Sensorerfassung durch induktive oder kapazitive Kopplung mit dem Metallmaterial durchgeführt wird.

Zugfahrzeug und Nachlauffahrzeug befinden sich häufig nicht in der optimalen Stellung relativ zueinander, wenn eine Kupplungsverbindung zwischen den Fahrzeugen hergestellt werden soll. Beispielsweise können das Zugfahrzeug und das Nachlauffahrzeug einen Winkel um eine Gierachsen- oder/und Nickachsenparallele miteinander einschließen. Zusätzlich oder alternativ können die beiden Fahrzeuge relativ zueinander längs der Gierachse translatorisch oder/und um die Rollachse rotatorisch verlagert sein. Deswegen ist es eine sinnvolle Weiterbildung der Erfindung, wenn der vorbestimmte Kupplungsstellungsbereich, bezogen auf eine Bezugs-Mittelstellung der Kupplungseinrichtungen im Zustand einer hergestellten Kupplungsverbindung mit auf horizontaler ebener Fahrbahn stehenden Fahrzeugen des so gebildeten Zugs, durch eine translatorische Auslenkung der Kupplungseinrichtungen aus der Bezugs-Mittelstellung von bis zu ± 5mm in vertikaler Richtung relativ zueinander oder/und durch eine rotatorische Auslenkung aus der Bezugs-Mittelstellung um einen Rollwinkel von bis zu ± 20° der Kupplungseinrichtungen relativ zueinander bezüglich einer Rollachse des aus Zug- und Nachlauffahrzeug gebildeten Zuges definiert ist. In diesem Fall ist für die Herstellung einer Kupplungsverbindung unter nicht optimalen Bedingungen genügend Spiel geschaffen, so dass das Kupplungsmittel, ohne sich im Gegenkupplungsmittel zu verklemmen, in den Kupplungsstellungsbereich eingeführt werden kann.

Nach der Erfassung, ob das Kupplungsmittel sich im Kupplungsstellungsbereich befindet oder nicht, gibt der Sensor ein das Erfassungsergebnis anzeigendes Sensorausgabesignal aus, das beispielsweise ein elektrisches Signal sein kann. Eine ausgegebene Spannung von 0 V könnte anzeigen, dass sich das Kupplungsmittel nicht im Kupplungsstellungsbereich befindet, ein vorbestimmter Spannungswert größer 0 könnte das Gegenteil anzeigen.

Bei einer Weiterbildung der Erfindung ist ein vom Sensor ausgegebenes und das Erfassungsergebnis anzeigendes Sensorausgabesignal ein optisches Signal oder wird, vorzugsweise mittels einer LED oder einer Glühlampe, in ein optisches Signal umgewandelt, da ein optisches Signal durch die menschliche Wahrnehmung direkt verarbeitet werden kann. Die Umwandlung könnte dabei bereits im oder am Sensor erfolgen.

Eine Umwandlung in ein optisches Signal ist auch vorteilhaft, wenn das optische Signal durch einen Lichtleiter an eine vorbestimmte Ausgabestelle, vorzugsweise in den Führerstand des Fahrzeugs, zumindest abschnittsweise übertragen wird. Alternativ dazu kann ein andersartiges Sensorausgabesignal, beispielsweise ein elektrisches Signal, mithilfe andersartiger Übertragungsmittel, beispielsweise einer elektrischen Leitung, in den Führerstand oder an eine vorbestimmte Ausgabestelle übertragen werden.

Die Ausgabestelle befindet sich vorzugsweise an einer Stelle, zu der der Fahrzeugführer Sichtkontakt besitzt, wenn er die Kupplungsverbindung herstellt oder das Zugfahrzeug in Bewegung setzt.

Weiter kann daran gedacht sein, dass die Kupplungsanordnung mit einer elektrischen Signalverarbeitungsvorrichtung ausgestattet ist, welche ein vom Sensor in Abhängigkeit vom Erfassungsergebnis erzeugtes Sensorausgabesignal elektronisch auswertet, insbesondere zum Zwecke einer Signaldarstellung an einer vorbestimmten Ausgabestelle. Beispielsweise könnte das Sensorausgabesignal auf einem Bildschirm im Führerstand des Fahrzeugs angezeigt werden oder zusammen mit anderen Signalen, die von anderen die Kupplungsanordnung überwachenden Sensoren abgegeben werden, ausgewertet werden.

Unter diesen weiteren Sensoren könnte sich auch ein zum ersten Sensor redundanter Sensor befinden. Ein weiterer redundanter Sensor vermindert das Risiko, dass durch einen defekten Sensor ein Ausgabesignal erzeugt wird, das anzeigt, dass sich das Kupplungsmittel in einer Kupplungsstellung befindet, und der Fahrzeugführer fälschlicherweise meint, dass eine Kupplungsverbindung hergestellt ist, obwohl dies nicht der Fall ist. Unterscheiden sich die Ausgabesignale der beiden Sensoren, kann der Fahrzeugführer davon ausgehen, dass einer der Sensoren fehlerhaft arbeitet. Eine Weiterbildung der erfindungsgemäßen Kupplungsanordnung umfasst deswegen einen zweiten, zum ersten Sensor redundanten Sensor, der dazu ausgebildet und angeordnet ist, zu erfassen, ob sich das Kupplungsmittel relativ zu dem das Gegenkupplungsmittel tragenden Fahrzeug in dem Kupplungsstellungsbereich befindet oder nicht.

Erfindungsgemäß ist das Kupplungsmittel eine Zugöse und weist das Gegenkupplungsmittel einen Kupplungskörper mit einem Zugösenaufnahmeraum, in welchem die Zugöse zur Herstellung der Kupplungsverbindung einführbar ist, und einen Kupplungsbolzen auf, welcher verstellbar ist zwischen einer Öffnungsstellung und einer Schließstellung, wobei der Kupplungsbolzen in der Schließstellung weiter in den Zugösenaufnahmeraum einragt, vorzugsweise diesen durchsetzt, als in der Öffnungsstellung, wobei dann, wenn die Zugöse sich innerhalb des Zugösenaufnahmeraums befindet und durch den Kupplungsbolzen durchsetzt oder zumindest durchsetzbar ist, sich die Zugöse zu dem das Gegenkupplungsmittel tragenden Fahrzeug in dem Kupplungsstellungsbereich befindet.

In diesem Zusammenhang bedeutet "durchsetzbar", dass der Kupplungsbolzen die Zugöse durchsetzen könnte, wenn er nicht durch einen anderen Gegenstand davon behindert werden würde, beispielsweise einen Lösehebel, der fehlerhafterweise nicht ausgelöst wurde, oder einen Fremdkörper, der sich innerhalb der Öffnung der Zugöse befindet, wie etwa Schmutz oder Schmierfett. Wie bereits gesagt, ist es in diesen Fällen vorteilhaft zu erfassen, ob sich die Zugöse in einer Kupplungsstellung innerhalb des Zugösenaufnahmeraums befindet, da die Kupplungsanordnung von außen betrachtet den Anschein erwecken kann, als ob eine Zugkraft aufnehmende Kupplungsverbindung vorhanden wäre, obwohl dies aber nicht so ist.

Die vorliegende Erfindung wird nachfolgend anhand der beiliegenden Zeichnungen näher erläutert werden. Es stellt dar:
- Figur 1: eine Seitenansicht im Teilschnitt durch eine erste Ausführungsform einer Kupplungsanordnung der vorliegenden Erfindung in Form einer Bolzenkupplung,

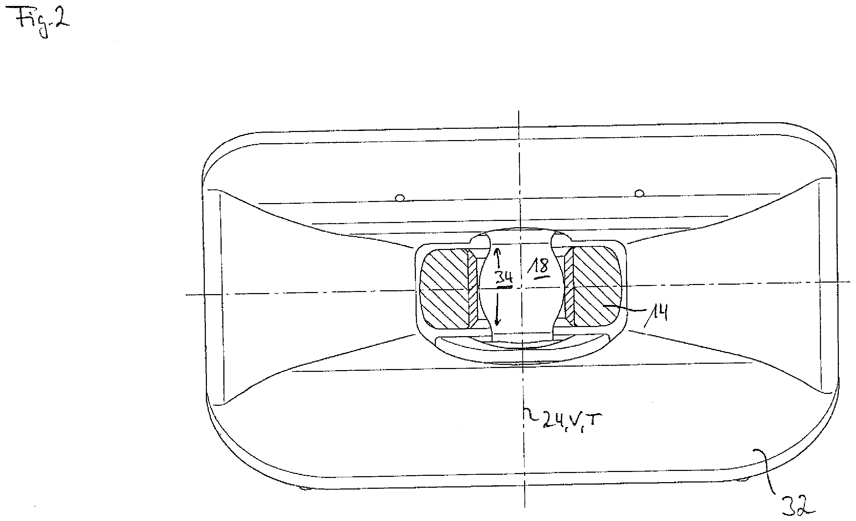

- Figur 2: eine Querschnittsansicht durch die Kupplungsanordnung von Figur 1 längs der Schnittebene II-II,
- Figur 3: eine Schnittansicht durch die Kupplungsanordnung von Figur 1 längs der Schnittebene III-III,

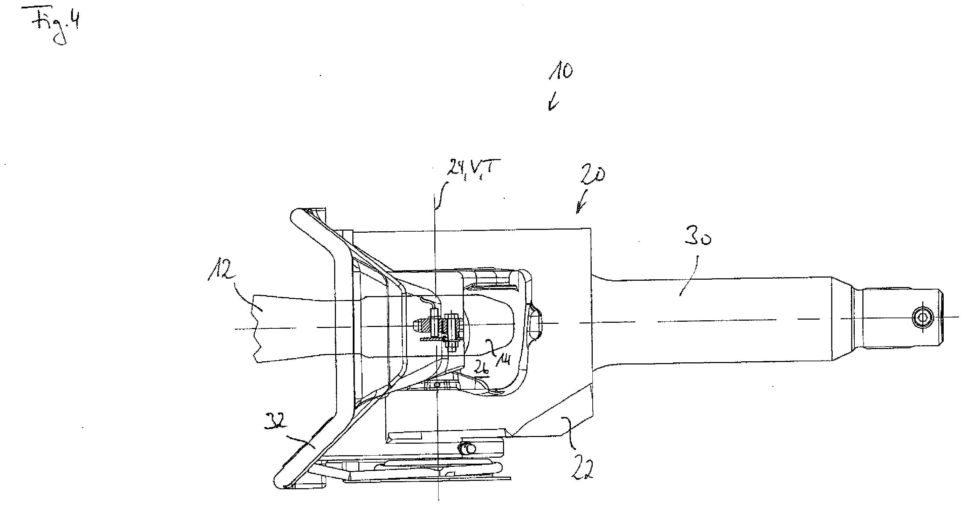

- Figur 4: eine Seitenansicht der Kupplungsanordnung der Figuren 1-3 aus der Blickrichtung von Figur 1, wobei die Kupplungsanordnung als Drahtmodell mit einer Teilschnittansicht des mechanischen Sensors dargestellt ist,
- Figur 5: eine Schnittansicht einer zweiten Ausführungsform einer Kupplungsanordnung, wiederum in Gestalt einer Bolzenkupplung, mit Blickrichtung wie in Figur 3 und
- Figuren 6a bis 6c: einen Ankupplungsvorgang der Kupplungsanordnung der zweiten Ausführungsform von Figur 5 mit Blickrichtung wie in Figur 5.

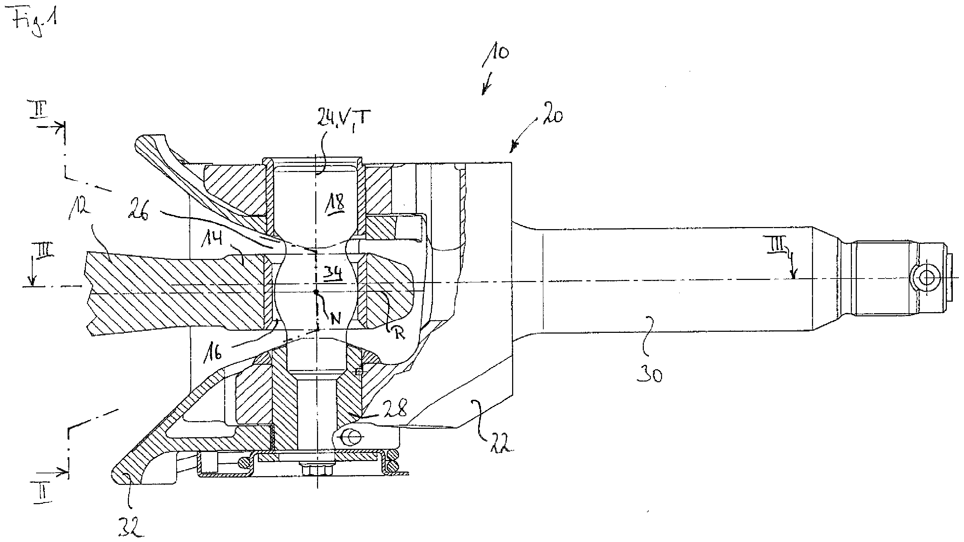

In Figur 1 ist eine erste Ausführungsform einer erfindungsgemäßen Kupplungsanordnung allgemein mit 10 bezeichnet. Es handelt sich dabei um eine Bolzenkupplung. In an sich bekannter Weise weist die Kupplungsanordnung 10 eine üblicherweise mit einem in den Figuren nicht dargestellten Nachlauffahrzeug fest verbundene Deichsel 12 auf, an deren fahrzeugfernem Längsende eine Zugöse 14 vorgesehen ist. Das Auge 16 der Zugöse 14 ist in der Darstellung von Figur 1 von einem Kupplungsbolzen 18 durchsetzt. Der Kupplungsbolzen 18 befindet sich daher in der Kupplungsstellung.

Der Kupplungsbolzen 18 ist Teil eines üblicherweise mit einem Zugfahrzeug fest verbundenen Gegenkupplungsmittels 20.

Das Gegenkupplungsmittel 20 weist in dem in Figur 1 dargestellten Ausführungsbeispiel einen Kupplungskörper 22 auf, in welchem der Kupplungsbolzen 18 längs einer üblicherweise mit der Kupplungsbolzenlängsachse 24 zusammenfallenden Verstellbahn V zwischen einer nicht dargestellten Öffnungsstellung und der dargestellten Kupplungsstellung verstellbar aufgenommen ist. Die zur Verstellung des Kupplungsbolzens 18 zwischen den genannten Stellungen verwendete Stellmechanik ist in Figur 1 nicht dargestellt. Sie befindet sich in der Regel über dem oberen Ende des Kupplungsbolzens 18.

Der Kupplungskörper 22 weist einen Zugösenaufnahmeraum 26 auf, in den die Zugöse 14 zur Herstellung einer Kupplungsverbindung eingeführt wird, bis sie sich in einer Kupplungsbereitschaftsstellung befindet, in welcher sie von dem Kupplungsbolzen 18 durchsetzbar ist.

In Figur 1 befindet sich die Zugöse 14 beziehungsweise die Deichsel 12 mit der Zugöse 14 in einer Kupplungsstellung.

Im unteren Bereich des Kupplungskörpers 22 kann ein Widerlager 28 vorgesehen sein, in welches der Kupplungsbolzen 18 in seiner Kupplungsstellung formschlüssig eingreift, um den Kupplungsbolzen 18 in seiner Kupplungsstellung auch im Falle eines Auftretens hoher Zugkräfte in seiner Stellung zu sichern.

Zur Verbindung mit dem Zugfahrzeug ist an dem Kupplungskörper 22 üblicherweise eine Zugstange 30 vorgesehen, welche in einem nicht dargestellten, vorzugsweise zugfahrzeugfesten Lagerbock an dem Zugfahrzeug gesichert sein kann.

Als Einführhilfe zum Einführen der Zugöse 14 in den Zugösenaufnahmeraum 26 beim Annähern der Zugöse 14 an das Gegenkupplungsmittel 20 ist an letzterem ein Fangmaul 32 in an sich bekannter Weise vorgesehen. Das Fangmaul 32 ist in einem vorbestimmten Relativschwenkbereich um die Kupplungsbolzenlängsachse 24 schwenkbar. Hierdurch kann beispielsweise ein Abbiegen des aus Zugfahrzeug und Nachfahrzeug gebildeten Zugs um enge Kurven oder um Haarnadelkurven beziehungsweise Serpentinenkurven ohne zerstörende Kollision zwischen Deichsel 12 und Fangmaul 32 erfolgen.

Um der Zugöse 14 in ihrer in Figur 1 gezeigten Kupplungsstellung dann, wenn sie vom Kupplungsbolzen 18 durchsetzt ist, eine für den Zugbetrieb von Zugfahrzeug und Nachlauffahrzeug erforderliche Relativbeweglichkeit realtiv zum Gegenkupplungsmittel 20 und insbesondere zum Kupplungsbolzen 18 zu ermöglichen, weist der Kupplungsbolzen 18 in seinem Durchsetzungsabschnitt 34, welcher von der Zugöse 14 bei hergestellter Kupplungsverbindung umgeben ist, eine ballige, vorzugsweise teilspherische Gestalt auf, welche der Zugöse 14 relativ zum Durchsetzungsabschnitt 34 des Kupplungsbolzens 18 vier Relativbewegungsfreiheitsgrade ermöglicht. Dies ist zum einen ein rotatorischer Relativbewegungsfreiheitsgrad um eine zur Nickachse des Fahrzeugs parallele Drehachse (das ist in Figur 1 eine zur Zeichenebene dieser Figur orthogonale Drehachse N), zum anderen ein rotatorischer Relativbewegungsfreiheitsgrad um eine zur Rollachse des Fahrzeugs parallele Drehachse R (das ist eine in der Zeichenebene der Figur 1 gelegene, zur Kupplungsbolzenlängsachse 24 orthogonale Drehachse) und zum dritten ein translatorischer Bewegungsfreiheitsgrad längs einer zur Gierachse des Fahrzeugs parallelen Translationsachse (das ist in Figur 1 die in der Zeichenebene der Figur 1 gelegene und mit der Kupplungsbolzenlängsachse 24 zusammenfallende Translationsachse T).

Derartige Relativbewegungsfreiheitsgrade sind funktionsnotwendig, damit ein mit der in Figur 1 gezeigten Kupplung gebildeter Zug aus Zugfahrzeug und Nachlauffahrzeug beschädigungsfrei über unebene oder/und gekrümmte Fahrbahnoberflächen bewegt werden kann. Für ein Abbiegen des Zuges um eine Kurve kann die Zugöse 14 überdies relativ zum Kupplungsbolzen 18 um dessen Längsachse 24 drehen (vierter Freiheitsgrad).

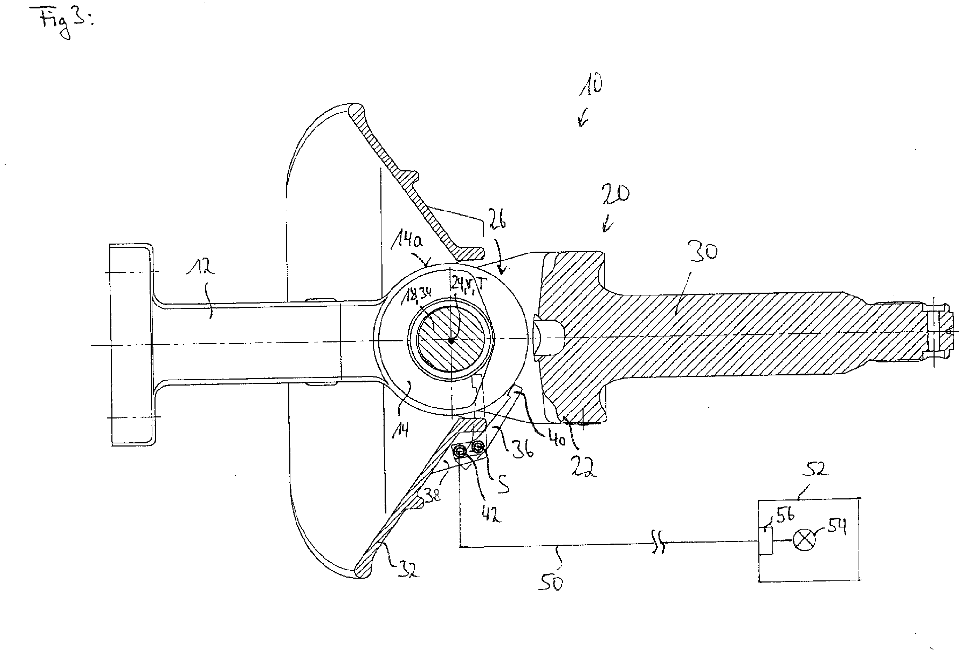

In Figur 3 ist ein mechanischer Sensor 36 gezeigt, welcher im dargestellten Beispiel an einer Montagezunge 38 am Fangmaul 32 relativ zum Fangmaul 32 verschwenkbar aufgenommen ist. Genauer ist der Schwenkhebel 36 im dargestellten Beispiel um eine zur Kupplungsbolzenlängsachse 24 parallele Schwenkachse S schwenkbar an dem Fangmaul 32 aufgenommen. Der Schwenkhebel 36 kann jedoch auch am Kupplungskörper 22 aufgenommen sein.

Der Schwenkhebel 36 weist einen Kontaktabschnitt 40 auf, welcher dazu ausgebildet ist, bei Einführung der Zugöse 14 in den Zugösenaufnahmeraum 26 mit einer Außenfläche 14a der Zugöse 14 in Anlageeingriff zu gelangen. Um diesen Anlageeingriff sicherzustellen, kann der Schwenkhebel 36 in seine in Figur 3 strichliniert dargestellte Stellung vorgespannt sein, in der der Kontaktabschnitt 40 des Schwenkhebels 36 näher bei der Verstellbahn V des Bolzens 18 gelegen ist als in seiner in Figur 3 mit durchgehender Linie gezeigten Betriebsstellung.

In dem in Figur 3 gezeigten Beispiel ist der Kontaktabschnitt 40 an einem Längsende des Schwenkhebels 36 ausgebildet.

Der Schwenkhebel 36 kann über sein Schwenkgelenk um die Schwenkachse S hinausragen. Der Schwenkhebel 36 kann einen Näherungssensor 42 tragen, etwa an seinem anderen, vom Kontaktabschnitt 40 fernliegendem Längsendbereich, sodass die Schwenkachse S des Schwenkhebels 36 zwischen Kontaktabschnitt 40 und Näherungssensor 42 verläuft. Allerdings können der Näherungssensor 42 und der Kontaktabschnitt 40 auch auf der gleichen Seite des Schwenkhebels 36, bezogen auf die Schwenkachse S, gelegen sein.

Der Näherungsschalter 42 erfasst, ob ihm eine Erfassungsfläche, etwa eine ihm zugewandte Fläche der Montagezunge 38, gegenüberliegt oder nicht. Dann, wenn dem Näherungsschalter 42 eine Fläche der Montagezunge 38 gegenüberliegt, ist dies üblicherweise durch eine Verlagerung des Schwenkhebels 36 um seine Schwenkachse S bewirkt, was durch Einführung der Zugöse 14 in den Zugösenaufnahmeraum 26 in eine Kupplungsstellung der Zugöse 14 durch die Zugöse 14 geschieht. Dies bedeutet, dass dem Näherungsschalter 42 in seiner in Figur 3 strichliniert dargestellten Bereitschaftsstellung keine Fläche der Montagezunge 38 gegenüberliegt. Anstelle einer Fläche der Montagezunge 38 kann eine beliebig andere Fläche am Gegenkupplungsmittel 20 als Erfassungsfläche herangezogen werden. Die Verwendung einer Oberfläche der Montagezunge 38 als Sensierfläche für den Näherungsschalter 42 hat den Vorteil, dass hierfür kein gesondertes weiteres Bauteil an dem Gegenkupplungsmittel 20 angeordnet zu werden braucht.

Daher kann Schwenkhebel 36 durch seine Gestalt so ausgebildet sein, dass der Montageort des Näherungsschalters 42 genau so gelegen ist, dass ein daran befestigter Näherungsschalter 42 dann eine ihm gegenüberliegende Fläche erfasst, wenn sich die den Schwenkhebel 36 durch Anlageeingriff verschwenkende Zugöse 14 in einer Kupplungsstellung, also im Kupplungsstellungsbereich befindet.

Aufgrund der oben beschriebenen Federvorspannung des Schwenkhebels 36 bewegt sich der Schwenkhebel 36 automatisch in seine Bereitschaftsstellung zurück, wenn die Zugöse 14 bestimmungsgemäß aus dem Zugösenaufnahmeraum 26 entfernt wird.

Der aus Schwenkhebel 36 und Näherungsschalter 42 gebildete Sensor liefert solange ein die korrekte Lage der Zugöse 14 im Kupplungsstellungsbereich anzeigendes Signal, wie sich die Zugöse 14 im Kupplungsstellungsbereich befindet.

Beispielsweise kann ein Signal, etwa ein Pegelsignal, des Näherungsschalters 42 über eine Signalleitung 50 in ein lediglich grob schematisch angedeutetes Führerhaus 52 übertragen werden. Abhängig von dem Pegel des vom Näherungsschalters 42 ausgegebenen Signals kann ein Signalausgabemittel 54, etwa eine Lampe, oder eine Leuchtdiode durch entsprechendes Leuchtsignal, etwa durch einen Farbwechsel von Rot auf Grün oder umgekehrt, die Kupplungssituation an der Kupplungsanordnung 10 anzeigen. Hierzu kann die Signalleitung 50 mit einer Steuervorrichtung 56 gekoppelt sein, welche abhängig von dem Signalpegel des vom Näherungsschalter 42 ausgegebenen Signals den Betrieb des Signalausgabemittels 54 im Führerhaus 52 steuert.

Ein Fahrzeugführer hat daher anhand des vom Näherungsschalter 42 ausgegebenen Signals sehr einfach die Möglichkeit, nach Auslösen einer Verstellung des Kupplungsbolzens 18 in die Kupplungsstellung zu verifizieren, ob der dadurch bewirkte Ankupplungsvorgang erfolgreich war und zu einer wirksamen Kupplungsverbindung zwischen Deichsel 12 mit Zugöse 14 und dem Gegenkupplungsmittel 20 geführt hat.

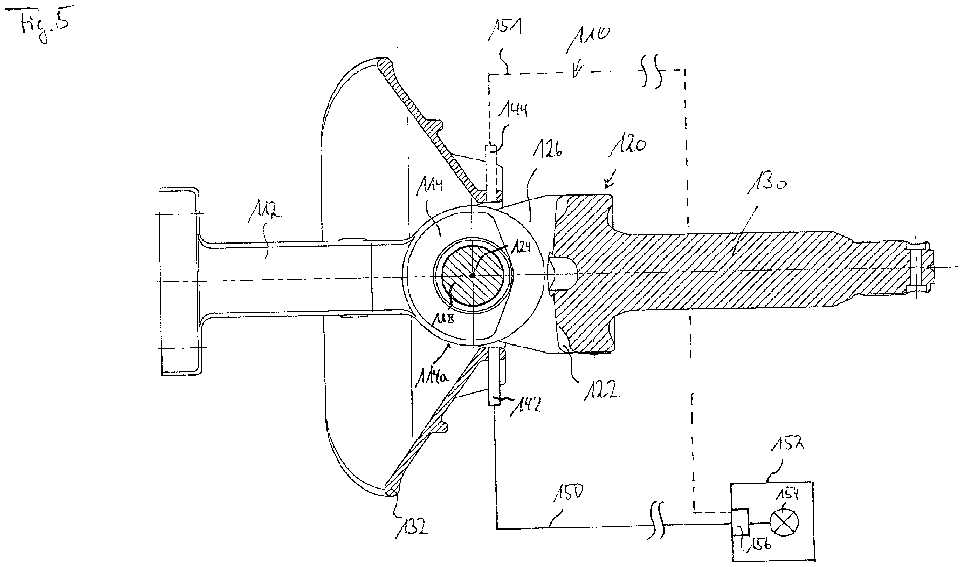

In Figur 5 ist eine zweite Ausführungsform einer erfindungsgemäßen Kupplungsanordnung dargestellt. Der Blick auf die Kupplungsanordnung der zweiten Ausführungsform entspricht dabei jenem von Figur 3 der ersten Ausführungsform der Kupplungsanordnung 10.

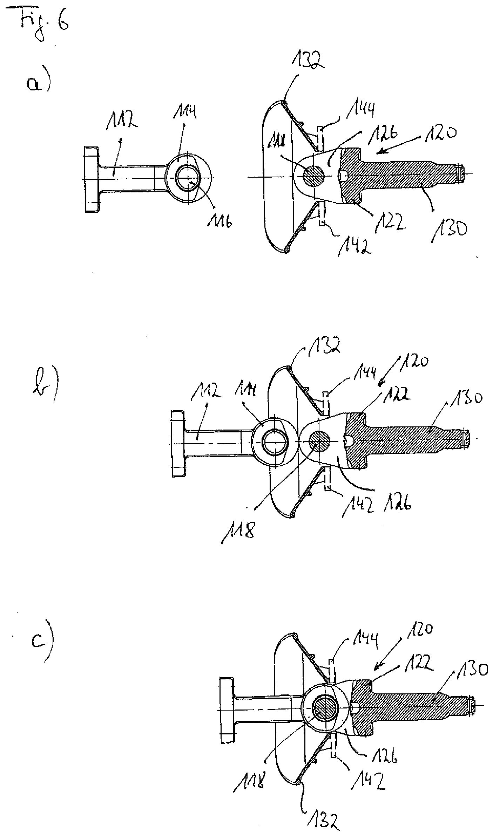

Gleiche beziehungsweise funktionsgleiche Bauteile und Bauteilabschnitte der zweiten Ausführungsform sind mit den gleichen Bezugszeichen versehen wie jene der ersten Ausführungsform, jedoch erhöht um die Zahl 100. Die zweite Ausführungsform wird nachfolgend nur insofern erläutert werden, als sie sich von der ersten Ausführungsform unterscheidet, auf deren Beschreibung ansonsten auch zur Erläuterung der zweiten Ausführungsform der Figuren 5 und 6 ausdrücklich verwiesen wird.

Anstelle eines mechanischen Sensors, wie er in der ersten Ausführungsform erläutert ist, weist die zweite Ausführungsform der Figuren 5 und 6 lediglich einen berühungslosen Sensor 142 auf, welcher ein Low-Pegel-Signal dann ausgibt, wenn sich kein Material der Zugöse 114 in seinem Erfassungsfeld befindet, und welcher ein High-Pegel-Signal dann ausgibt, wenn sich Material der Zugöse 114 in seinem Erfassungsbereich befindet.

Beispielsweise kann der Sensor 142 ein induktiver oder kapazitiver Näherungssensor sein, da die ihm zu detektierende Zugöse 114 überwiegend aus Metall gebildet ist. Der Näherungssensor 142 ist dabei derart am Fangmaul 132 angeordnet, dass er sicher dann ein High-Pegel-Signal ausgibt, wenn sich die Zugöse 114 im Kupplungsstellungsbereich befindet.

Es ist dabei unerheblich, ob der verwendete berührungslose Näherungssensor 142 dann, wenn die Zugöse 114 sich im Kupplungsstellungsbereich befindet, ein High- oder ein Low-Pegel-Signal ausgibt, solange sich der Signalpegel ändert, wenn die Zugöse 114 in den Kupplungsstellungsbereich eintritt oder diesen verlässt.

Zur Erzielung einer Sensorredundanz und weiter zur Ermöglichung einer Überprüfung der Signalqualität der Zugösendetektion im Zugösenaufnahmeraum 126 kann das Gegenkupplungsmittel 120 einen weiteren Näherungssensor 144 umfassen. Dies ist vorzugsweise ein zu dem Sensor 142 identischer berührungsloser Sensor.

Auch der zweite Sensor 144 ist derart angeordnet, dass sich der Pegel des von ihm ausgegebenen Signals dann ändert, wenn die Zugöse 114 in den Kupplungsstellungsbereich eintritt und diesen wieder verlässt. Durch Anordnung und Ausrichtung der Sensoren 142 und 144 sowie durch Auswahl von Sensoren 142 und 144 mit geeigneter Sensorsensitivität kann sichergestellt werden, dass der Pegelwechsel des Signals mit dem Eintritt beziehungsweise Austritt der Zugöse 114 in den Kupplungsstellungsbereich beziehungsweise aus diesem heraus erfolgt. Der zweite Sensor 144 kann über eine zweite Signalleitung 151 in gleicher Weise wie der erste Sensor 142 mit dem Signalausgabemittel 154 verbunden sein.

Die Verwendung von berührungslosen Sensoren ist für die vorliegende Erfindung besonders vorteilhaft, da diese gegen Verschmutzung und Verschleiß unempfindlich sind und es im Bereich einer Anhängerkupplung stets zu einer gewissen Verschmutzung kommen kann.

In den Figuren 6 a) bis c) ist die Annäherung einer Deichsel 112 mit Zugöse 114 an das Gegenkupplungsmittel 120 dargestellt. Dabei wird idealerweise die Deichsel 112 in Längsrichtung des Zugfahrzeugs, also in Richtung von dessen Rollachse, dem Gegenkupplungsmittel 120 in dessen Zugösenaufnahmeraum 126 hinein solange angenähert, bis die Zugöse 114 sich schließlich, wie in Figur 6 c) dargestellt, im Kupplungsstellungsbereich befindet und durch den Kupplungsbolzen 118 durchsetzbar ist. Nur in der in Figur 6 c) gezeigten Relativstellung von Deichsel 112 beziehungsweise Zugöse 114 einerseits und Gegenkupplungsmittel 120 andererseits liefern die Sensoren 142 und 144 einen Signalpegel, welcher dem Fahrzeugführer eine zur Herstellung einer wirksamen Kupplungsverbindung korrekte Relativlage der Zugöse 114 im Zugösenaufnahmeraum 126 anzeigt.

Der Fachmann wird abhängig von der Größe des Kupplungsstellungsbereichs sowie von Art und Sensitivität der verwendeten Sensoren die richtigen Anordnungsstellen und die richtige Ausrichtung der Sensoren ohne Weiteres ermitteln können.

Es können auch mehr als zwei Sensoren zur Detektion der Zugöse in der Kupplungsstellung verwendet werden.

## Patentansprüche

1. Kupplungsanordnung zum lösbaren Kuppeln eines Zugfahrzeugs mit einem Nachlauffahrzeug, wobei die Kupplungsanordnung umfasst:
- ein mit einem der beiden Fahrzeuge aus Zugfahrzeug und Nachlauffahrzeug verbundenes Kupplungsmittel (12, 14; 112, 114) und
- ein mit dem jeweils anderen Fahrzeug verbundenes Gegenkupplungsmittel (20; 120), wobei das Kupplungsmittel (12, 14; 112, 114) und das Gegenkupplungsmittel (20; 120) als Kupplungseinrichtungen zur Herstellung einer wenigstens Zugkraft übertragenden Kupplungsverbindung, vorzugsweise formschlüssig, miteinander kuppelbar und zur Trennung dieser Kupplungsverbindung voneinander entkuppelbar sind, wobei sich das Kupplungsmittel (12, 14; 112, 114) relativ zu dem das Gegenkupplungsmittel (20; 120) tragenden Fahrzeug bei hergestellter Kupplungsverbindung in einem vorbestimmten Kupplungsstellungsbereich befindet,
wobei das Kupplungsmittel (12, 14; 112, 114) eine Zugöse (14; 114) ist und das Gegenkupplungsmittel (20; 120) einen Kupplungskörper (22, 122) mit einem Zugösenaufnahmeraum (26; 126), in welchem die Zugöse (14; 114) zur Herstellung der Kupplungsverbindung einführbar ist, und einen Kupplungsbolzen (18; 118) aufweist, welcher verstellbar ist zwischen einer Öffnungsstellung und einer Schließstellung, wobei der Kupplungsbolzen (18; 118) in der Schließstellung weiter in den Zugösenaufnahmeraum (26; 126) einragt als in der Öffnungsstellung, wobei dann, wenn die Zugöse (14; 114) sich innerhalb des Zugösenaufnahmeraums (26; 126) befindet und durch den Kupplungsbolzen (18; 118) durchsetzt oder zumindest durchsetzbar ist, sich die Zugöse (14; 114) relativ zu dem das Gegenkupplungsmittel (20; 120) tragenden Fahrzeug in dem Kupplungsstellungsbereich befindet,
wobei weiter die Kupplungsanordnung (10; 110) einen Sensor (36, 42; 142, 144) umfasst, welcher dazu ausgebildet und angeordnet ist, zu erfassen, ob sich das Kupplungsmittel (12, 14; 112, 114) relativ zu dem das Gegenkupplungsmittel (20; 120) tragenden Fahrzeug in dem Kupplungsstellungsbereich befindet oder nicht, wobei die Kupplungsanordnung ein um eine Kupplungsbolzenlängsachse (24) schwenkbares Fangmaul (32; 132) aufweist und der Sensor (36, 42; 142, 144) am Fangmaul (32; 132) angebracht ist, **dadurch gekennzeichnet, dass** der Sensor (36, 42; 142, 144) ein in Form eines Verlagerungselements ausgestalteter mechanischer Sensor (36, 42) ist, wobei das Verlagerungselement relativ zum Fangmaul (32; 132) verlagerbar angeordnet ist, wobei entweder
- das Verlagerungselement ein relativ zum Fangmaul schwenkbar angeordneter Schwenkhebel ist, dessen Relativschwenkstellung relativ zu dem Fangmaul (32; 132) ermittelt wird, wobei der Schwenkhebel dann, wenn sich das Kupplungsmittel (12, 14; 112, 114) relativ zum Gegenkupplungsmittel (20; 120) in einer Kupplungsstellung befindet, der Schwenkhebel einen Relativschwenkwinkel in einem vorbestimmten Kupplungsschwenkwinkelbereich aufweist, und wobei dann sich das Kupplungsmittel (12, 14; 112, 114) relativ zum Gegenkupplungsmittel (20; 120) nicht in einer Kupplungsstellung befindet, der Relativschwenkwinkel des Schwenkhebels außerhalb des vorbestimmten Kupplungsschwenkwinkelbereich liegt, oder
- der mechanischer Sensor (36, 42) einen translatorisch verlagerbaren Taster aufweist, welcher vom Kupplungsmittel (12, 14; 112, 114) bei Annäherung an das Gegenkupplungsmittel translatorisch verdrängt wird,
oder dass der Sensor (36, 42; 142, 144) ein berührungsloser Sensor (142, 144) ist, wobei der berührungslose Sensor ausgebildet ist als ein induktiver Sensor (142, 144), welcher das Kupplungsmittel (12, 14; 112, 114) durch induktive Kopplung mit dem Metallmaterial des Kupplungsmittels (12, 14; 112, 114) erfasst oder/und als ein kapazitiver Sensor (142, 144), welcher das Kupplungsmittel (12, 14; 112, 114) durch kapazitive Kopplung mit dem Metallmaterial des Kupplungsmittels (12, 14; 112, 114) erfasst.

2. Kupplungsanordnung nach Anspruch 1,
**dadurch gekennzeichnet, dass** der Sensor (36, 42; 142, 144; 242, 244) seitlich in Bezug auf die Längsachse des den Sensor (36, 42; 142, 144; 242, 244) tragenden Fahrzeugs neben dem vorbestimmten Kupplungsstellungsbereich angebracht ist.

3. Kupplungsanordnung nach Anspruch 1 oder 2,
**dadurch gekennzeichnet, dass** der Sensor (36, 42; 142, 144; 242, 244) dazu ausgebildet ist, unabhängig von Betriebszuständen der Kupplungsanordnung (10; 110; 210) zu erfassen, ob sich das Kupplungsmittel (12, 14; 112, 114; 212, 214) relativ zu dem das Gegenkupplungsmittel (20; 120; 220) tragenden Fahrzeug in dem Kupplungsstellungsbereich befindet oder nicht.

4. Kupplungsanordnung nach einem der vorhergehenden Ansprüche,
**dadurch gekennzeichnet, dass** der Sensor (36, 42; 142, 144; 242, 244) dazu ausgebildet ist, nach Beginn eines Ankupplungsvorgangs zu erfassen, ob sich das Kupplungsmittel (12, 14; 112, 114; 212, 214) relativ zu dem das Gegenkupplungsmittel (20; 120; 220) tragenden Fahrzeug in dem Kupplungsstellungsbereich befindet oder nicht.

5. Kupplungsanordnung nach den Ansprüchen 1 bis 4,
**dadurch gekennzeichnet, dass** der Sensor (36, 42; 142, 144; 242, 244) dazu ausgebildet ist, nach Abschluss eines Ankupplungsvorgangs zur Herstellung der Kupplungsverbindung zu erfassen, ob sich das Kupplungsmittel (12, 14; 112, 114; 212, 214) relativ zu dem das Gegenkupplungsmittel (20; 120; 220) tragenden Fahrzeug in dem Kupplungsstellungsbereich befindet oder nicht.

6. Kupplungsanordnung nacheinem der vorhergehenden Ansprüche,
**dadurch gekennzeichnet, dass** der Sensor (36, 42; 142, 144) auf Höhe der vertikalen Mitte des Fangmauls (32; 132) angebracht ist.

7. Kupplungsanordnung nach einem der vorhergehenden Ansprüche,
**dadurch gekennzeichnet, dass** der vorbestimmte Kupplungsstellungsbereich bezogen auf eine Bezugs-Mittelstellung der Kupplungseinrichtungen durch eine translatorische Auslenkung der Kupplungseinrichtungen von bis zu ± 5mm in vertikaler Richtung relativ zueinander oder/und eine rotatorische Auslenkung um einen Rollwinkel von bis zu ± 20° der Kupplungseinrichtungen relativ zueinander bezüglich einer Rollachse des aus Zug- und Nachlauffahrzeug gebildeten Zuges definiert ist.

8. Kupplungsanordnung nach einem der vorhergehenden Ansprüche,
**dadurch gekennzeichnet, dass** ein vom Sensor (36, 42; 142, 144; 242, 244) ausgegebenes und das Erfassungsergebnis anzeigendes Sensorausgabesignal ein optisches Signal ist oder, vorzugsweise mittels einer LED (54; 154; 254) oder einer Glühlampe, in ein optisches Signal umgewandelt wird.

9. Kupplungsanordnung nach Anspruch 8,
**dadurch gekennzeichnet, dass** das optische Signal durch einen Lichtleiter an eine vorbestimmte Ausgabestelle, vorzugsweise in den Führerstand (52; 152; 252) des Fahrzeugs, zumindest abschnittsweise übertragbar ist.

10. Kupplungsanordnung nach einem der vorhergehenden Ansprüche,
**dadurch gekennzeichnet, dass** sie eine elektrische Signalverarbeitungsvorrichtung umfasst, welche ein vom Sensor (36, 42; 142, 144; 242, 244) in Abhängigkeit vom Erfassungsergebnis erzeugtes Sensorausgabesignal elektronisch auswertet, insbesondere zum Zwecke einer Signaldarstellung an einer vorbestimmten Ausgabestelle.

11. Kupplungsanordnung nach einem der vorhergehenden Ansprüche,
**dadurch gekennzeichnet, dass** sie einen zweiten, zum ersten Sensor (142; 242) redundanten Sensor (144; 244) umfasst, der dazu ausgebildet und angeordnet ist, zu erfassen, ob sich das Kupplungsmittel (12, 14; 112, 114; 212, 214) relativ zu dem das Gegenkupplungsmittel (20; 120; 220) tragenden Fahrzeug in dem Kupplungsstellungsbereich befindet oder nicht.

## Claims

1. A hitch arrangement for releasable hitching of a towing vehicle to a towed vehicle, the hitch arrangement encompassing:
- a hitching means (12, 14; 112, 114) connected to one of the two vehicles from among the towing vehicle and towed vehicle;
- a counterpart hitching means (20; 120) connected to the respective other vehicle, the hitching means (12, 14; 112, 114) and the counterpart hitching means (20; 120) constituting hitch devices and being hitchable to one another, preferably in positively engaged fashion, in order to establish an at least towing-force-transferring hitched connection, and being unhitchable from one another in order to sever that hitched connection, the hitching means (12, 14; 112, 114) being located in a predetermined hitched position region relative to the vehicle carrying the counterpart hitching means (20; 120) when the hitched connection is established,
the hitching means (12, 14; 112, 114) being a tow eye (14; 114) and the counterpart hitching means (20; 120) being a hitch body (22; 122) having a tow eye receiving space (26; 126) into which the tow eye (14; 114) is introducible in order to establish the hitched connection, and having a hitch pin (18; 118) that is displaceable between an open position and a closed position; the hitch pin (18; 118) projecting farther into the tow eye receiving space (26; 126) in the closed position than in the open position; when the tow eye (14; 114) is located within the tow eye receiving space (26; 126) and is penetrated, or at least penetrable, by the hitch pin (18; 118), the tow eye (14; 114) being located in the hitched position region relative to the vehicle carrying the counterpart hitching means (20; 120);
the hitch arrangement (10; 110) further encompassing a sensor (36, 42; 142, 144) that is embodied and arranged to detect whether or not the hitching means (12, 14; 112, 114) is located in the hitched position region relative to the vehicle carrying the counterpart hitching means (20; 120); the hitch arrangement comprising a coupling jaw (32; 132) pivotable around a longitudinal hitch bolt axis (24), and the sensor (36, 42; 142, 144) being mounted on the coupling jaw (32; 132),
**characterized in that** the sensor (36, 42; 142, 144) is a mechanical sensor (36, 42) configured in the form of a displacement element, the displacement element being arranged displaceably relative to the coupling jaw (32; 132), such that either
- the displacement element is a pivot lever, arranged pivotably relative to the coupling jaw, whose relative pivot position relative to the coupling jaw (32; 132) is ascertained; the pivot lever having a relative pivot angle in a predetermined hitch pivot angle region when the hitching means (12, 14; 112, 114) is in a hitched position relative to the counterpart hitching means (20; 120); and the relative pivot angle of the pivot lever lying outside the predetermined hitch pivot angle region when the hitching means (12, 14; 112, 114) is not in a hitched position relative to the counterpart hitching means (20; 120), or
- the mechanical sensor (36, 42) comprises a translationally displaceable feeler that is translationally displaced by the hitching means (12, 14; 112, 114) upon approach toward the counterpart hitching means; or
the sensor (36, 42; 142, 144) is a non-contact sensor (142, 144), the non-contact sensor being embodied as an inductive sensor (142, 144) that detects the hitching means (12, 14; 112, 114) by inductive coupling to the metallic material of the hitching means (12, 14; 112, 114), and/or as a capacitive sensor (142, 144) that detects the hitching means (12, 14; 112, 114) by capacitive coupling to the metallic material of the hitching means (12, 14; 112, 114).

2. The hitch arrangement according to Claim 1,
**characterized in that** the sensor (36, 42; 142, 144; 242, 244) is mounted laterally with respect to the longitudinal axis of the vehicle carrying the sensor (36, 42; 142, 144; 242, 244), alongside the predetermined hitched position region.

3. The hitch arrangement according to Claim 1 or 2,
**characterized in that** the sensor (36, 42; 142, 144; 242, 244) is embodied to detect, independently of operating states of the hitch arrangement (10; 110; 210), whether or not the hitching means (12, 14; 112, 114; 212, 214) is located in the hitched position region relative to the vehicle carrying the counterpart hitching means (20; 120; 220).

4. The hitch arrangement according to one of the preceding claims,
**characterized in that** the sensor (36, 42; 142, 144; 242, 244) is embodied to detect, after the beginning of a hitching-on operation, whether or not the hitching means (12, 14; 112, 114; 212, 214) is located in the hitched position region relative to the vehicle carrying the counterpart hitching means (20; 120; 220).

5. The hitch arrangement according to Claims 1 to 4,
**characterized in that** the sensor (36, 42; 142, 144; 242, 244) is embodied to detect, after completion of a hitching-on operation to establish the hitched connection, whether or not the hitching means (12, 14; 112, 114; 212, 214) is located in the hitched position region relative to the vehicle carrying the counterpart hitching means (20; 120; 220).

6. The hitch arrangement according to one of the preceding claims,
**characterized in that** the sensor (36, 42; 142, 144) is mounted at the height of the vertical center of the coupling jaw (32; 132).

7. The hitch arrangement according to one of the preceding claims,
**characterized in that** the predetermined hitched position region is defined, with respect to a reference center position of the hitch devices, by a translational deflection of the hitch devices of up to +/- 5 mm in a vertical direction relative to one another, and/or by a rotational deflection through a roll angle of up to +/- 20° of the hitch devices relative to one another with respect to a roll axis of the combination constituted from the towing vehicle and towed vehicle.

8. The hitch arrangement according to one of the preceding claims,
**characterized in that** a sensor output signal that is outputted by the sensor (36, 42; 142, 144; 242, 244) and indicates the detection result is an optical signal or is converted, preferably by means of an LED (54; 154; 254) or an incandescent lamp, into an optical signal.

9. The hitch arrangement according to Claim 8,
**characterized in that** the optical signal is transferrable, at least in portions, through a light guide to a predetermined output point, preferably in the cab (52; 152; 252) of the vehicle.

10. The hitch arrangement according to one of the preceding claims,
**characterized in that** it encompasses an electrical signal processing apparatus that electronically evaluates a sensor output signal generated by the sensor (36, 42; 142, 144; 242, 244) depending on the detection result, in particular for the purpose of signal presentation at a predetermined output point.

11. The hitch arrangement according to one of the preceding claims,
**characterized in that** it encompasses a second sensor (144; 244) that is redundant with respect to the first sensor (142; 242) and is embodied and arranged to detect whether or not the hitching means (12, 14; 112, 114; 212, 214) is located in the hitched position region relative to the vehicle carrying the counterpart hitching means (20; 120; 220).

## Revendications

1. Arrangement d'accouplement pour l'accouplement amovible d'un véhicule tracteur à un véhicule tracté, l'arrangement d'accouplement comprenant :
- un moyen d'accouplement (12, 14; 112, 114) relié à l'un des deux véhicules parmi le véhicule tracteur et le véhicule tracté, et
- un moyen de contre-accouplement (20; 120) relié à l'autre véhicule respectif, le moyen d'accouplement (12, 14; 112, 114) et le moyen de contre-accouplement (20; 120) pouvant être accouplés l'un à l'autre, de préférence par complémentarité de forme, en tant que dispositifs d'accouplement pour réaliser une connexion d'accouplement transmettant au moins une force de traction, et pouvant être désaccouplés l'un de l'autre pour séparer cette connexion d'accouplement, dans lequel le moyen d'accouplement (12, 14; 112, 114) se trouve dans une zone de position d'accouplement prédéterminée par rapport au véhicule portant le moyen de contre-accouplement (20; 120) lorsque la connexion d'accouplement est établie,
dans lequel le moyen d'accouplement (12, 14; 112, 114) est un anneau de remorquage (14; 114) et le moyen de contre-accouplement (20; 120) comprend un corps d'accouplement (22, 122) avec un espace de réception d'anneau de remorquage (26; 126), dans lequel l'anneau de remorquage (14; 114) peut être inséré pour établir la connexion d'accouplement, et une tige d'accouplement (18; 118), qui est réglable entre une position ouverte et une position fermée, la tige d'accouplement (18; 118) faisant saillie plus loin dans l'espace de réception d'anneau de remorquage (26; 126) dans la position fermée que dans la position ouverte, dans lequel, lorsque l'anneau de remorquage (14; 114) est situé dans l'espace de réception d'anneau de remorquage (26; 126) et est traversé, ou au moins peut être traversé, par la tige d'accouplement (18; 118), la tige d'accouplement (18; 118) est inséré dans l'espace de réception d'anneau de remorquage (26; 126) dans la position fermée, l'anneau de remorquage (14; 114) est situé dans la région de position d'accouplement par rapport au véhicule portant le moyen de contre-accouplement (20; 120),
l'agencement d'accouplement (10; 110) comprenant en outre un capteur (36, 42; 142, 144) qui est adapté et agencé pour détecter si le moyen d'accouplement (12, 14; 112, 114) est situé ou non par rapport au véhicule portant le moyen de contre-accouplement (20; 120) dans la zone de position d'accouplement par rapport au véhicule portant le moyen de contre-accouplement(20; 120), l'arrangement d'accouplement présentant une bouche d'arrêt (32; 132) pouvant pivoter autour d'un axe longitudinal de tige d'accouplement (24) et le capteur (36, 42; 142, 144) étant fixé sur la bouche d'arrêt (32; 132), **caractérisé en ce que** le capteur (36, 42; 142, 144) est un capteur mécanique (36, 42) adapté comme un élément de déplacement, l'élément de déplacement étant agencé de manière déplaçable par rapport à la bouche d'arrêt (32; 132) dans lequel soit
- l'élément de déplacement est un levier pivotant disposé de manière à pouvoir pivoter par rapport à la bouche d'arrêt, dont la position relative de pivotement par rapport à la bouche d'arrêt (32; 132) est déterminée, dans lequel, lorsque le moyen d'accouplement (12, 14; 142, 144) est dans une position d'accouplement par rapport au moyen de contre-accouplement (20; 120), le levier pivotant a un angle de pivotement relatif dans une plage d'angles de pivotement d'accouplement prédéterminée, et dans lequel lorsque le moyen d'accouplement (12, 14; 112, 114) n'est pas dans une position d'accouplement par rapport au moyen de contre-accouplement (20; 120), l'angle de pivotement relatif du levier pivotant se situe en dehors de la plage d'angles de pivotement d'accouplement prédéterminée, soit
- le capteur mécanique (36, 42) comporte un palpeur déplaçable en translation qui est déplacé en translation par le moyen d'accouplement (12, 14; 112, 114) lorsqu'il s'approche du moyen de contre-accouplement,
ou **en ce que** le capteur (36, 42; 142, 144) est un capteur sans contact (142, 144), dans lequel le capteur sans contact est adapté comme un capteur inductif (142, 144) qui détecte le moyen d'accouplement (12, 14; 112, 114) par accouplement inductif avec le matériau métallique du moyen d'accouplement (12, 14; 112, 114) et/ou comme un capteur capacitif (142, 144) qui détecte le moyen d'accouplement (12, 14; 112, 114) par accouplement capacitif avec le matériau métallique du moyen d'accouplement (12, 14; 112, 114).

2. Arrangement d'accouplement selon la revendication 1, **caractérisé en ce que** le capteur (36, 42; 142, 144; 242, 244) est monté latéralement par rapport à l'axe longitudinal du véhicule portant le capteur (36, 42; 142, 144; 242, 244) à proximité de la zone de position d'accouplement prédéterminée.

3. Arrangement d'accouplement selon la revendication 1 ou 2, **caractérisé en ce que** le capteur (36, 42; 142, 144; 242, 244) est adapté pour détecter si le moyen d'accouplement (12, 14; 112, 114; 212, 214) se trouve ou non dans la zone de position d'accouplement par rapport au véhicule portant le moyen de contre-accouplement (20; 120; 220), indépendamment des conditions de fonctionnement de l'arrangement d'accouplement (10; 110; 210).

4. Arrangement d'accouplement selon l'une des revendications précédentes, **caractérisé en ce que** le capteur (36, 42; 142, 144; 242, 244) est adapté pour détecter après le début d'une opération d'accouplement si le moyen d'accouplement (12, 14; 112, 114; 212, 214) est ou non dans la zone de position d'accouplement par rapport au véhicule portant le moyen de contre-accouplement (20; 120; 220).

5. Arrangement d'accouplement selon les revendications 1 à 4, **caractérisé en ce que** le capteur (36, 42; 142, 144; 242, 244) est adapté pour détecter après l'achèvement d'une opération d'accouplement pour établir la connexion d'accouplement si le moyen d'accouplement (12, 14; 112, 114; 212, 214) est situé ou non dans la zone de position d'accouplement par rapport au véhicule portant le moyen de contre-accouplement (20; 120; 220).

6. Arrangement d'accouplement selon l'une des revendications précédentes, **caractérisé en ce que** le capteur (36, 42; 142, 144) est monté au niveau du centre vertical de la bouche d'arrêt (32; 132).

7. Arrangement d'accouplement selon l'une des revendications précédentes, **caractérisé en ce que** la zone de positions d'accouplement prédéterminée par rapport à une position centrale de référence des dispositifs d'accouplement est définie par une déviation en translation des dispositifs d'accouplement de jusqu'à ± 5 mm en sens vertical les uns par rapport aux autres et/ou une déviation en rotation des dispositifs d'accouplement les uns par rapport aux autres d'un angle de roulis jusqu'à ± 20° par rapport à un axe de roulis du train formé par le véhicule tracteur et le véhicule tracté.

8. Arrangement d'accouplement selon l'une des revendications précédentes, **caractérisé en ce qu'**un signal de sortie émis par le capteur (36, 42; 142, 144; 242, 244) et indiquant le résultat de la détection est un signal optique ou est converti en un signal optique, de préférence au moyen d'une LED (54; 154; 254) ou d'une lampe à incandescence.

9. Arrangement d'accouplement selon la revendication 8,
**caractérisé en ce que** le signal optique peut être transmis au moins par sections par un guide de lumière à un point de sortie prédéterminé, de préférence dans la cabine de conduite (52; 152; 15 252) du véhicule.

10. Arrangement d'accouplement selon l'une des revendications précédentes, **caractérisé en ce qu'**il comprend un arrangement de traitement de signal électrique qui évalue électroniquement un signal de sortie de capteur généré par le capteur (36, 42; 142, 144; 242, 244) en fonction du résultat de détection, en particulier dans le but de représenter le signal à un point de sortie prédéterminé.

11. Arrangement d'accouplement selon l'une des revendications précédentes, **caractérisé en ce qu'il** comprend un deuxième capteur (144; 244) redondant au premier capteur (142; 242), qui est adapté et agencé pour détecter si le moyen d'accouplement (12, 14; 112, 114; 212, 214) se trouve ou non dans la zone de position d'accouplement par rapport au véhicule portant le moyen de contre-accouplement (20; 120; 220).
